# EUROPEAN PATENT SPECIFICATION

(11) **EP 1 263 852 B1**
(45) Date of publication and mention of the grant of the patent: **08.04.2009**
(21) Application number: 01905878.3
(22) Date of filing: 15.02.2001
(51) Int. Cl.: C08J 9/32, C08L 21/00

(54) **USE OF FOAMED RUBBER STRUCTURE**
VERWENDUNG EINER GESCHÄUMTEN GUMMISTRUKTUR
UTILISATION D'UNE STRUCTURE DE CAOUTCHOUC

(30) Priority: 16.02.2000 GB 0003458
(43) Date of publication of application: 11.12.2002
(73) Proprietor: QinetiQ Limited, London, SW1 6TD (GB)
(72) Inventor: BURKE, Martin, Paul, Farnborough, Hants GU14 0LX (GB); BRYANT, Richard, Farnborough, Hants GU14 0LX (GB)
(74) Representative: Humphreys, Elizabeth Jane
(86) International application number: PCT/GB2001/000600
(87) International publication number: WO 2001/060896

(56) References cited:
- EP-A- 0 935 636
- WO-A-00/06637
- WO-A-98/20067
- DE-A- 19 644 855
- US-A- 5 766 703
- PATENT ABSTRACTS OF JAPAN vol. 011, no. 089 (C-411), 19 March 1987 (1987-03-19) & JP 61 243836 A (YAMAUCHI RUBBER IND CO LTD), 30 October 1986 (1986-10-30)
- PATENT ABSTRACTS OF JAPAN vol. 2000, no. 11, 3 January 2001 (2001-01-03) & JP 2000 230067 A (UCHIYAMA MFG CORP), 22 August 2000 (2000-08-22)

## Description

This invention relates to uses of rubbers. Where the context permits, use of the word "rubber" herein is intended to include synthetic elastomers as well as natural rubber.

Rubber, by virtue of its compliant, elastic nature, is a material well suited to applications requiring impact absorption and vibration damping. In respect of rubber used in applications requiring low intensity vibration damping, e.g. soundproofing, it is desirable that the rubber has a high degree of compliance.

Conventionally, a high degree of compliance can be achieved by foaming rubber. This was first achieved in by Charles Hancock in 1846 (English Patent 11,032) where turpentine and ammonium carbonate were added to gutta percha; the underlying principle being that upon heating, the solvent is driven off and the salt decomposes into gases, causing swelling within the rubber and creating pores. Although substantial refinements have been made to the method since its inception, the basic foaming process remains the same. For example, see US 4596684 in which an enhanced method of manufacturing low density foamed rubber is disclosed.

Current foaming processes produce large voids, typically greater than 2 mm in diameter and, unfortunately, such foams have the disadvantage that they perform poorly under pressure, in that application of a pressure on the foam will cause the voids to collapse.

US Patent 6058994 describes a method for introducing microspheres of up to 300 µm diameter into a rubber tyre tread compound for the purpose of increasing the friction coefficient of the rubber. There is a optimum range for the volume ratio of microspheres in order to improve the abrasion resistance. Below this range, the abrasion resistance is not significantly improved and above it, the abrasion resistance tends to decrease. The optimum void content is 8 - 20%. The components of the rubber are mixed in an internal mill in a two stage process, with the microspheres, sulphur and vulcanisation accelerator being added in the second stage of mixing. The internal mill subjects the components to high shear which in turn generates heat. These two stages are carried out at a temperature lower than the expansion temperature of the microspheres, by 10 or 15°C, to prevent expansion during the mixing stage. Prematurely expanded microspheres can collapse during subsequent processing.

WO 00/06637 describes polymer foam articles having a substantially smooth surface. The foam includes a plurality of microspheres, at least one of which is an expandable polymeric microsphere.

WO 98/20067 describes a material composition comprising recycled particulate rubber and expandable microspheres and, optionally, a thermoplastic and other additives.

It is an object of the present invention to use a compliant rubber with enhanced integrity whilst operating under pressure. Abrasion resistance is not a specific objective.

The current invention relates to acoustic decoupling or insertion loss materials for marine applications. In simple terms such a material acts as a reflector of acoustic energy. The requirements are that the material has both a lower acoustic wave velocity and a lower density than the surrounding medium (i.e. water). These requirements are achieved by incorporating voids into the rubber. High void fractions are required to give high acoustic decoupling performance and enable light weight and highly compliant articles to be made. The compliance and decoupling properties of the foam are optimised by forming microspheres in the 500-1000µm size range.

The current invention achieves a higher resistance to pressure than gas blown foams since the plastic walls of the microsphere enable the foams to resist compressive deformation. This leads both to improved performance at pressure and improved resistance to permanent deformation (i.e. creep) which can occur when gas blown foams are subjected to compression to extended periods of time (i.e. several weeks or months).

According to the invention, there is provided the use of a foamed rubber having a plurality of microvoids formed from expanded microspheres incorporated therein, wherein the microspheres are expanded during heating and vulcanisation of the rubber and wherein the volume fraction of the expanded microspheres is 35 - 80% in the foamed rubber and wherein the microspheres have an expanded diameter of between 400 µm and 1000 µm, as an acoustic decoupling or insertion loss material for marine applications.

Throughout this specification, microspheres means hollow plastic spheres of diameter 1µm to 1000µm within the rubber. The use of microspheres to produce microvoids within the rubber offers a number of advantages over conventional foamed rubbers which use gas voids. When microspheres are employed, the voids have a wall which imparts stiffness to the rubber and enables the rubber to be used at higher pressures than conventional foamed rubbers.

Preferably, the rubber has a range of microvoid sizes incorporated therein. This can be achieved by incorporating expandable microspheres, which may be of different sizes, containing different liquids and comprising different surface materials so that on expansion, a variety of void sizes are produced. Expanded microspheres are hollow plastic spheres that do not appreciably change in size during the manufacture of the rubber. They may be made out of a thermoset plastic or may be thermoplastic microspheres that have been heated and thus expanded to a desirable size prior to incorporation into the rubber. Expandable microspheres means hollow plastic spheres which do change in size appreciably during the manufacture of the rubber. They may be made out of thermoplastic materials which expand during the heating phase of the manufacture of the rubber.

Preferably, the volume fraction of microspheres is 40-80% in the vulcanised rubber.

One method of manufacturing a foamed rubber suitable for use as an acoustic decoupling or insertion loss material for marine applications, said foamed rubber having a plurality of microvoids formed from expanded microspheres incorporated therein comprises the steps of:
i) providing a rubber;
ii) incorporating additives;
iii) adding and mixing expandable microspheres into the rubber composition; and
iv) heating the rubber to effect vulcanisation;
wherein the microspheres are expanded during heating and vulcanisation, and wherein the volume fraction of the expanded microspheres is 35 - 80% in the foamed rubber, and wherein the microspheres have an expanded diameter of between 400 µm and 1000 µm.

A variety of different types of microspheres may be used. This process can be used with a variety of natural and synthetic rubber grades. The choice of rubber depends on the properties desired in the final product.

The step of manipulating the rubber may comprise milling. A suitable method is to use a two roll mill where one roll rotates at a faster speed than the other. The rubber will form a sheet around the faster of the two rolls, and the shearing forces encountered at the nip between the rolls enable dispersion of the additives and microspheres in the rubber. Cross cutting of the rubber at regular intervals ensures satisfactory distribution of the additives and microspheres throughout the batch of rubber.

As the inventor has found that the microspheres may begin to expand at 20 to 30°C below their expansion temperature, it is preferable to use a method of manufacture that does not involve significant heating of the rubber components prior to the vulcanisation process. A milling process, such as is described in the previous paragraph, results in some heating of the components, perhaps from room temperature to 40°C. If the temperature rises much beyond this, the rolls used during milling may be cooled by, for example, water.

Preferably, the microspheres are expandable at suitable temperatures for the vulcanisation of a rubber. This allows the microspheres to be added to the rubber in an unexpanded state which may be more convenient than incorporation of the microspheres in the expanded state, where their volume is over one thousand times greater. It also means that during the vulcanisation process, the expandable microspheres expand, causing a volume increase in the rubber which would help to completely fill the shape of a mould. This could result in less rejected articles either through incomplete filling of a mould or from processing marks on the surface of the rubber.

Preferably, the microspheres are thermoplastic microspheres filled with a volatile liquid. When these expandable microspheres are heated to temperatures above the glass transition temperature of the thermoplastic material used as the skin of the microspheres, the skin becomes soft and easily deformed. This softening of the skin, combined with an increase in gas pressure due to the evaporation of the liquid within the microsphere, which is also a result of the heating process, allows expansion of the microspheres within the rubber. In some circumstances, it may be desirable to incorporate microspheres filled with different volatile liquid or even gases and having different skin materials to obtain a range of sizes of microvoid within the rubber.

The invention will now be described by way of example only with reference to the accompanying figures.
Figure 1 shows, schematically, a rubber for use according to the invention
Figure 2 shows a microvoid of the rubber of figure 1
Figure 3 shows, schematically a conventional two roll mill

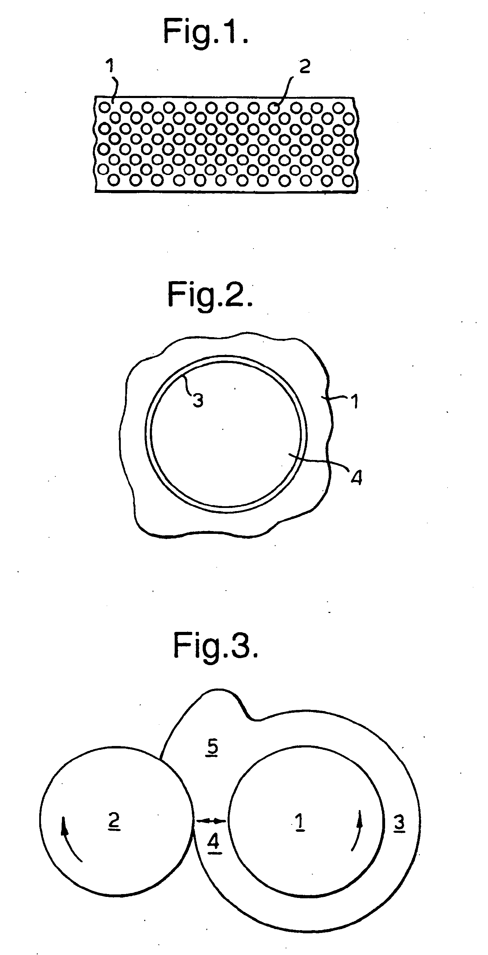

In figure 1, a rubber 1 contains microspheres 2 having a diameter of approximately 400 µm. For the purposes of illustration, the size of the microspheres is greatly exaggerated though, in practice, the microvoids being of 400 µm diameter are barely detectable by the human eye. The rubber has a void fraction of approximately 40%. By manipulating the vulcanisation process, void fractions of 35-60% can be obtained. Figure 2 shows a microsphere 2 of the rubber of figure 1 having a thin wall 3 made from a thermoplastic and containing propane gas 4.

A number of examples of preparing rubber for use according to the invention will now be described.

Table 1 shows a natural rubber formulation.

**Table 1**

| | Ingredient | Parts by weight |
|---|---|---|
| 1 | Natural Rubber , SMR10 | 100 |
| 2 | Zinc oxide | 5 |
| 3 | Stearic acid | 1 |
| 4 | Accelerator - Cyclohexyl benzthiazyl sulphenamide | 4 |
| 5 | Sulphur | 1 |
| 6 | Retarder - Vulkalent G | 1.5 |
| 7 | Antioxidant - Flectol TMQ | 1 |
| 8 | Microsphere - Expancel 092 DU120 | 3 |

Natural rubber pieces are added to a two roll mill so they form a band around the front roll and are masticated for several minutes. This reduces the viscosity and molecular mass of the rubber. The nip between the rolls is then adjusted to form a rolling bank of rubber. Friction speed is used so that the speed of the front roll is 1.2 times that of the back roll.

A side view of a conventional two roll mill is shown in Figure 3. The front roll (1) rotates at a faster speed than the back roll (2). The rubber is added in several pieces and forms a band (3) around the front roll. To incorporate additives, the nip or separation between the rolls (4) is decreased until a rolling bank of rubber (5) is formed. The additives (labelled 2-7 in table 1) are then added to the rolling bank into which they are dispersed, followed by addition of the microspheres (labelled 8 in table 1).

Additives labelled 2-6 in table 1 are required for the vulcanisation step of the manufacture of the rubber. Additive 7 is an antioxidant used to extend the service life of the rubber by reducing the effect of oxidation. For this example of a rubber, expandable microspheres are used, additive 8.

When expandable microspheres are used , the vulcanisation process is preferably manipulated to allow the microspheres to expand during the heating step. In order to achieve this delay in the onset of vulcanisation, a delayed action accelerator, additive 4, is used in the rubber formulation. During the delay period, the viscosity of the rubber remains low, allowing the microspheres to expand. The addition of a retarder, additive 6, also assists the expansion process. The retarder gives a useful increase in the induction time without detriment to the final extent of cure. In this example N-cyclohexylthiophthalimide was used as the retarder (Bayer Vulkalent G). Various other retarders can be used such as salicylic acid and Vulkalent E/C.

The additives are mixed into the band of rubber around the front roll but are not mixed into the rolling bank of rubber adjacent to the roll. To give proper mixing, cross cutting is performed. In this process some of the banded rubber layer is cut away from the roll, folded over, and reincorporated around the roll. This has the effect of mixing the banded rubber with the rubber in the bank and repeated cross cutting ensures the additives are distributed uniformly throughout the mix. The mixing process takes approximately 15 minutes. The rubber is then removed from the mill as a sheet.

Rubbers are made using a sulphur vulcanisation mechanism. Vulcanisation involves the generation of chemical cross links between the rubber chains to improve the elasticity of the rubber. The reaction requires several additives. The zinc oxide, additive 2, and stearic acid, additive 3, are required in the vulcanisation reaction and are called activators. An accelerator, additive 4, is used to increase and control the rate of vulcanisation. Sulphur, 5, forms the cross links.

A blank is cut from the sheet that was removed from the roll mill so that it fills typically 60% of the volume of a steel mould. The blank is preferably solid and void free as this is less likely to produce a rejected article when the rubber is removed form the mould. The steel mould is preheated at the pressing temperature of 150°C, while the blank is heated 10 minutes at 100°C to reduce the thermal lag The blank is then placed in the mould at a temperature of 150°C and a weight of 5-10 tonnes applied. The rubber is left in the mould for 70 minutes to allow the microspheres to expand and to vulcanise the rubber. The rubber is then demoulded and allowed to cool on a flat metal surface. The formulation given in table 1, gives void fractions of typically 35-50%in the vulcanised rubber. The void fraction depends on the quantity of rubber used in the mould.

The microspheres preferably have an unexpanded diameter of 5 to 10 µm and an expanded diameter of between 400 µm and 1000µm. Preferably, the microspheres have an expansion temperature of between 120°C and 180°C. This allows the microspheres to expand at standard temperatures used for the vulcanisation of a rubber. The expansion temperature is dependant on the glass transition temperature or the melting temperature of the polymer from which the sphere is made.

In a second example, 4 parts of microsphere (additive 8) were used in the formulation given in Table 1. A void fraction of 35-60% was obtained.

Table 2 shows a butadiene rubber formulation. The void fraction for this rubber is typically 40% when the rubber is manufactured under the same conditions as the natural rubber described above.

**Table 2**

| Ingredient | Parts by Weight |
|---|---|
| Buna CB23 Butadiene Rubber | 100 |
| Zinc Oxide | 5 |
| Stearic Acid | 1 |
| Cyclohexyl benzthiazyl sulphenamide accelerator | 1.5 |
| Flectol TMQ Antioxidant | 1 |
| Sulphur | 2 |
| Vulkalent G Retarder | 0.5 |
| Expancel 092 DU120 Microsphere | 3 |

Nitrile rubbers are copolymers of acrylonitrile and butadiene, where the properties of the polymer depend on the amount of acrylonitrile in the polymer chain. Table 3 shows a formulation for a nitrile rubber containing 18% acrylonitrile. The void fraction for this rubber is typically 40% when the rubber is manufactured under the same conditions as the natural rubber described above.

In a further example, 4 parts of microsphere were used in the formulation given in Table 2. The void fraction for this rubber is typically 40-55% when the rubber is manufactured under the same conditions as the natural rubber described above.

**Table 3.**

| Ingredient | Parts by Weight |
|---|---|
| Nitrile Rubber Perbunan NT1845 | 100 |
| Zinc Oxide | 2 |
| Stearic Acid | 2 |
| Cyclohexyl benzthiazyl sulphenamide accelerator | 1 |
| Flectol TMQ Antioxidant | 1 |
| Sulphur | 2 |
| Vulkalent G Retarder | 0.5 |
| Expancel 092 DU120 Microsphere | 3 |

Table 4 shows a natural rubber/butadiene rubber blend formulation. The void fraction for this rubber is typically 40% when the rubber is manufactured under the same conditions as the natural rubber described above.

**Table 4**

| Ingredient | Parts by Weight |
|---|---|
| Buna CB23 Butadiene Rubber | 50 |
| SMR-L Natural Rubber | 50 |
| Zinc Oxide | 5 |
| Stearic Acid | 1 |
| Cyclohexyl benzthiazyl sulphenamide accelerator | 1.5 |
| Flectol TMQ Antioxidant | 1 |
| Sulphur | 2 |
| Vulkalent G Retarder | 0.5 |
| Expancel 092 DU120 Microsphere | 3 |

Table 5 shows a formulation for a nitrile rubber containing 34% acrylonitrile. The void fraction for this rubber is typically 35-40% when the rubber is manufactured under the same conditions as the natural rubber described above.

**Table 5**

| Ingredient | Parts by Weight |
|---|---|
| Krynac 34.50 Nitrile Rubber | 100 |
| Zinc Oxide | 2 |
| Stearic Acid | 2 |
| Cyclohexyl benzthiazyl sulphenamide accelerator | 2 |
| Flectol TMQ Antioxidant | 1 |
| Magnesium Carbonate Coated Sulphur | 2 |
| Expancel 092 DU120 Microsphere | 3 |

Table 6 shows an isoprene isobutylene rubber (commonly known as butyl rubber) formulation. The void fraction for this rubber is typically 35-40% when the rubber is manufactured under the same conditions as the natural rubber described above.

**Table 6**

| Ingredient | Parts by Weight |
|---|---|
| Butyl 100 Rubber | 100 |
| Zinc Oxide | 3 |
| Stearic Acid | 2 |
| Mercapto benz thiazyl sulphenamide (MBTS) accelerator | 0.25 |
| Tetra methyl thiurum disulphide (TMTD) accelerator | 1 |
| Flectol TMQ Antioxidant | 1 |
| Sulphur | 2 |
| Expancel 092 DU120 Microsphere | 3 |

Rubbers using plastic microspheres are found to give superior performance under hydrostatic pressure, compared to foams containing air or gas voids. Foams with microspheres are less prone to permanent deformation than conventional foams.

## Claims

1. Use of a foamed rubber having a plurality of microvoids formed from expanded microspheres incorporated therein, wherein the microspheres are expanded during heating and vulcanisation of the rubber and wherein the volume fraction of the expanded microspheres is 35 - 80% in the foamed rubber and wherein the microspheres have an expanded diameter of between 400 µm and 1000 µm, as an acoustic decoupling or insertion loss material for marine applications.

2. Use according to claim 1 wherein the microvoids in the foamed rubber have a range of sizes.

3. Use according to claim 1 or claim 2 wherein the microspheres are made from a thermoplastic material.

4. Use according to any preceding claim, wherein the foamed rubber is made by a sulphur vulcanisation mechanism.

## Patentansprüche

1. Verwendung eines geschäumten Kautschuks mit einer Vielzahl von Mikrohohlräumen, die durch darin eingebrachte und expandierte Mikrokügelchen erzeugt sind, wobei die Mikrokügelchen während des Erhitzens und der Vulkanisation des Kautschuks expandiert sind und wobei der Volumenanteil der expandierten Mikrokügelchen 35 bis 80 % beträgt und wobei die Mikrokügelchen im expandierten Zustand einen Durchmesser von 400 bis 1000 µm aufweisen, als Material zur akustischen Entkopplung oder als Einfügungsdämpfungsmaterial.

2. Verwendung nach Anspruch 1, wobei die Mikrohohlräume im geschäumten Kautschuk eine in einem Bereich liegende Größe aufweisen.

3. Verwendung nach Anspruch 1 oder 2, wobei die Mikrokügelchen aus einem thermoplastischen Material bestehen.

4. Verwendung nach einem der vorhergehenden Ansprüche, wobei der geschäumte Kautschuk durch einen Schwefelvulkanisationsmechanismus hergestellt ist.

## Revendications

1. Utilisation d'un caoutchouc mousse ayant une pluralité de microvides formés à partir de microsphères expansées incorporées à l'intérieur, où les microsphères sont expansées pendant le chauffage et la vulcanisation du caoutchouc et où la fraction volumique des microsphères expansées est 35 - 80 % dans le caoutchouc mousse et où les microsphères ont un diamètre expansé entre 400 µm et 1000 µm, comme matériau de découplage acoustique ou de perte d'insertion pour applications marines.

2. Utilisation selon la revendication 1 où les microvides dans le caoutchouc mousse ont une gamme de dimensions.

3. Utilisation selon la revendication 1 ou la revendication 2 où les microsphères sont en une matière thermoplastique.

4. Utilisation selon l'une quelconque des revendications précédentes où le caoutchouc mousse est produit par un mécanisme de vulcanisation au soufre.
